# EUROPEAN PATENT SPECIFICATION

(11) **EP 1 109 011 B1**
(45) Date of publication and mention of the grant of the patent: **02.09.2009**
(21) Application number: 00126329.2
(22) Date of filing: 01.12.2000
(51) Int. Cl.: G01N 25/72, G01N 21/95

(54) **Method for detecting the presence of mouldings in a package**
Verfahren zur Feststellung der Anwesenheit von Formkörpern in einer Verpackung
Procédé pour détecter la présence des corps moulés dans un emballage

(30) Priority: 03.12.1999 EP 99124220
(43) Date of publication of application: 20.06.2001
(73) Proprietor: NOVARTIS AG, 4056 Basel (CH)
(72) Inventor: Biel, Roger, 65936 Frankfurt am Main (DE)
(74) Representative: Bohest AG

(56) References cited:
- EP-A- 0 567 078
- EP-A- 0 691 273
- DE-A- 4 331 772
- DE-A- 19 629 101
- DE-U- 29 822 017
- GB-A- 2 309 077
- US-A- 5 558 231

## Description

The invention relates to a method for registering the presence of a moulding consisting of a biocompatible polymeric material, especially an ophthalmic lens, particularly a contact lens, in a package.

Mouldings consisting of a biocompatible polymeric material are usually placed in a package for storage and for transport. The packages in question are frequently so-called blister packages. A blister package consists of a plastic container, for example of polypropylene (PP), the top of which is sealed with film after the moulding has been placed in the plastic container.

In particular, contact lenses that are produced in large unit numbers, for example disposable contact lenses, are sealed into blister packages. Such contact lenses are preferably manufactured by the so-called mould or full-mould process. In this process, the lenses are manufactured into their final shape between two moulds, so that there is no need to subsequently finish the surfaces of the lenses, nor to finish the edges. Mould processes are described for example in PCT application no. WO/87/04390 or in European patent application EP-A-0 367 513.

To manufacture a contact lens, first of all a certain amount of the flowable starting material is placed in the female mould half. Afterwards, the mould is closed by placing the male mould half thereon. Normally, a surplus of starting material is used, so that, when the mould is closed, the excess amount is expelled into an overflow area adjacent to the outer mould cavity. The subsequent polymerisation or crosslinking of the starting material takes place by radiation with UV light, or by heat action, or by another non-thermal method.

The contact lenses produced in this manner are moulded parts having little mechanical stability and a water content of more than 60 % by weight. After manufacture, the lens is metrologically checked, then packaged and subjected to heat sterilisation at 121 °C in an autoclave.

In US-A-5,508,317, a new contact lens material is described, which is an important improvement in the chemistry of polymerisable starting materials for the manufacture of contact lenses. The patent discloses a water-soluble composition of a prepolymer, which is filled into the mould cavity and then crosslinked photochemically. Since the prepolymer has several crosslinkable groups, crosslinking is of particularly high quality, so that a finishes

| Test results: | | | |
|---|---|---|---|
| | IR camera | manual inspection | consistency |
| CL present | 240 | 240 | |
| CL not present | 180 | 180 | |
| total | 420 | 420 | 420 |
| | | | 100 % |

The test shows that the presence of contact lenses is detected at a rate of 100% by the IR camera. There was not a single case in which the camera had not noticed the absence of a lens. The IR camera thus enables fault-free detection to be made of contact lenses in a package.

### Test 2: Empty packages with the addition of a defined amount of water

In this test, all packs contained no contact lenses. In addition, a defined amount of water was added to one of the containers in a series of five. The amount of water was 50 µl for the first 50 tool holders and 100 µl for the last 34 tool holders. The aim of this test was to investigate the influence of possible water spillages on the results of measurement. An evaluation was again made by making a comparison between a manual inspection and the results of the contact lenses detected by the IR camera.

| Test results: | | | |
|---|---|---|---|
| | IR camera | manual inspection | consistency |
| CL present | 0 | 0 | |
| CL not present | 420 | 420 | |
| total | 420 | 420 | 420 |
| | | | 100 % |

The test shows that the detection system also operates in a trouble-free manner after the addition of water and accurately detects the absence of contact lenses.

In all, the invention offers the possibility of checking in a simple manner the presence of mouldings, especially ophthalmic lenses, particularly contact lenses, in a package which is open and contains no preserving solution. Owing to the high repeat rate of measurements, the camera can be operated continuously. lens of optical quality can be produced within a few seconds, without the necessity for subsequent extraction or finishing steps. Owing to the improved chemistry of the starting material as illustrated in the patent, contact lenses can be produced at considerably lower cost, so that in this way it is possible to produce disposable lenses.

Optical components produced in series, e.g. contact lenses, have to be checked for faults such as scratches, shrinkage or edges that have broken away. The components recognised as faulty are then rejected. However, at the moment there is no provision for checking whether a package has actually been filled with a contact lens. Under certain circumstances, empty packages may appear, which are not noticed. The client then discovers the empty package and is of course annoyed. However, if empty packages are recognised by chance or by spot checks, then either the whole batch has to be rejected or all the contact lens packages have to undergo 100% manual checking. Both procedures involve substantial costs.

EP-A-0 691 273 discloses an automated inspection system with transport and ejector conveyor for inspecting packages, such as blister packages, to verify the presence therein of products, such as contact lenses, prior to heat seating of the blister packages. The packages are optically inspected using video cameras.

DE-A-196 29 101 discloses a system for detecting and inspecting packages using an infrared (IR) camera. Empty packages are detected in that all packages are heated to +70°C. and only those filled with product (at +4°C) cool, at a certain point of time, to +10°C. whereas empty packages, at the same point of time have a temperature of +60°C_{.}

The invention is therefore based on the problem of providing a testing method with which it is possible to detect, at low cost, whether a moulding, especially a contact lens, is actually present in the package.

The invention solves this problem with the features indicated in claim 1. As far as further essential refinements are concerned, reference is made to the dependent claims.

By measuring the temperature of a package, it is possible to establish the presence of mouldings in a package. Packages containing a moulding, especially a contact lens, have a characteristic change in their temperature compared with a package without a contact lens.

The invention therefore relates to a method for registering presence of a moulding (5) consisting of a biocompatible polymeric material with adhering moisture in a blister package (2) whereby the package is open, **characterised in that** the packages is divided into at least two zones the local temperature distribution for each zone is measured and the results of measurement from both zones are compared, whereby one zone contains the moulding and the other zone does not, the difference between the two measurements being used to register the presence of a moulding.

In a preferred method the temperature distribution of several packages is measured simultaneously.

More Preferably an infrared line camera with a resolution of 0.5 to 0.1 K is used.

In a further preferred embodiment a sensor is used to detect when a package enters and/or leaves the measuring area of the infrared line camera.

### Most preferably the moulding is a contact lens.

By evaluating the temperature difference, it is possible to determine whether or not there is a contact lens in a package. In particular, by using the detecting method according to the invention, one can determine whether there is a contact lens in the package directly after the filling procedure. Further details and advantages of the invention may be seen from the description that follows and the drawing. In the drawing,
- Fig.1: shows a schematic illustration of an embodiment of a checking device for use in a method according to the invention;
- Fig.2: shows a schematic illustration of a tool holder filled with packages.

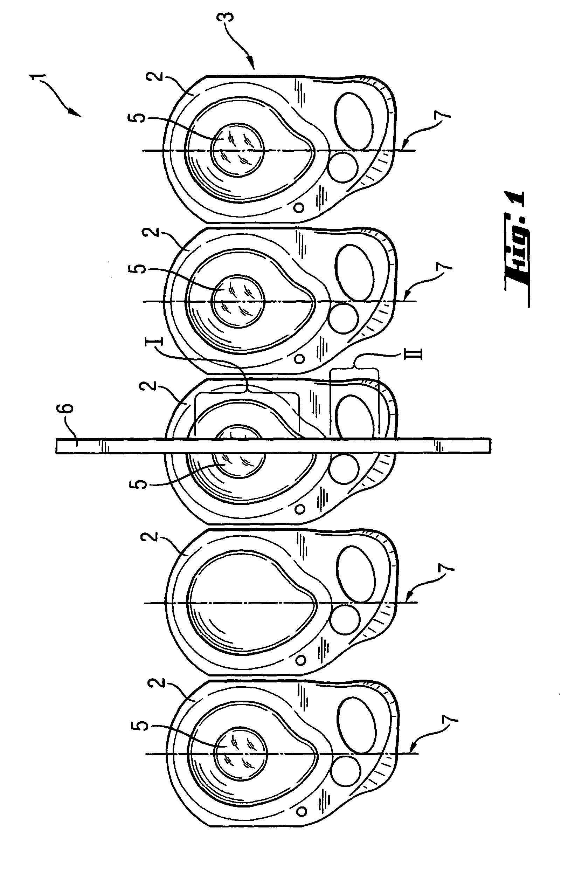

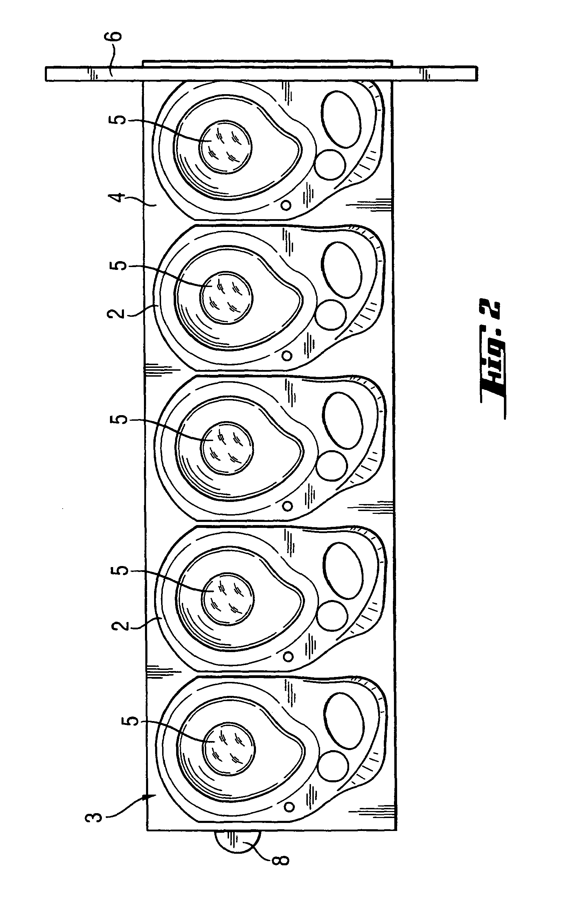

In Fig. 1, a checking device 1 for use in a method according to the invention is illustrated. The checking device 1 is preferably integrated into a packaging appliance, not illustrated here, in such a way that it is possible to detect the presence of a contact lens 5 in the package during the production process. Fig. 1 shows a schematic illustration of five blister containers 2, arranged in series, of a packaging unit especially for contact lenses 5, which are transported continuously by the appliance on a tool holder 4 illustrated schematically in fig. 2. Five blister containers 2 arranged in series form one blister strip 3. The blister containers 2 are joined together by a film strip not illustrated here, the outline of which corresponds to the contour of the top of the blister containers 2, since when the object to be packaged, preferably a contact lens 5, has been inserted, the film strip is heat-sealed to each blister container 2 individually. Prior to sealing the film, however, there is a provision according to the invention for checking whether each of the blister containers 2 contains a contact lens 5.

The checking device 1 comprises an infrared line camera 6 with a line resolution of preferably 128 pixels. It is preferably a camera made by Dias GmbH. The camera 6 advantageously has a sensitivity range of 0°-80°C with a resolution of 0.5-0.1 K, preferably 0.2 K. However, other IR sensors may also be used. Measurement is based on the effect that the contact lens 5 automatically cools through evaporation of the moisture adhering to the contact lens. If the contact lens 5 is placed in the package, this package is colder than one which does not contain a contact lens. This effect is detectable by a local temperature measurement.

The camera 6 is preferably incorporated in the packaging appliance over the tool holders 4 which are arranged in series advantageously in five production lines 7 and can be conveyed on conveyor belts, so that the measuring range covers all five lines 7, not illustrated here. Of course, it may be possible to modify the number of conveyor belts and thus the production lines 7 in the packaging appliance. The repeat rate of the measurements in respect of a blister container is advantageously very high, so that the camera 6 is preferably in continuous operation. In this way, a high degree of certainty can be achieved in respect of the measurement results. The camera 6 is advantageously equipped with an integrated electronic evaluation means and all five production lines 7 can therefore be monitored in real time by the camera 6. Through an intersection point directly on the camera 6, the latter can be connected to the machine control of the packaging appliance. However, it is also conceivable for the evaluation signals from the camera to be passed directly to a PC control unit of the appliance. The software for control and evaluation of the camera allows a measuring line from the camera 6 to be subdivided into several zones that can be monitored separately. One zone division was advantageously undertaken in such a way that each production line 7 can be detected separately. In addition, advantageously each production line is again divided into two zones, whereby one of the two zones detects an area I of the blister container 2 with a contact lens 5 and the other zone detects an area II without a contact lens. These two zones are suitably separated from one another by a transition area in which measurements are not made. This is possible, since, in addition to the actual area where the contact lens 5 is received, the blister containers 2 have a relatively elongated gripping area.

The results of measurement from both zones are then compared. In this way, a relative measurement is made, so that the system is relatively independent of external influences, such as room temperature. If the difference of the temperature measurement between the zone with the contact lens and the zone without the contact lens 5 gives a value of less than 1, this means that a contact lens is present in the package. A starting signal can be set at a certain value, which is sent to a metering element or to the machine control. This enables a counting of the contact lenses 5 for example.

As is also evident from fig. 2, the packaging appliance was advantageously equipped with a sensor 8, which detects when a tool holder 4 mounted with the blister containers 3 reaches the measuring area. The sensor 8 records when a tool holder 4 leaves and/or enters the measuring area. The sensor 8 may be designed for example as a light barrier; however, sensors operating capacitively or inductively are also possible. If the tool holder 4 has for example five blister containers, each holding one contact lens 5, then five contact lenses 5 must be detected. Since the results of measurement are passed directly to the machine control means, by making a comparison it can be established whether in fact five contact lenses 5 have been counted. Thus, it is not necessary to incorporate series of stoppers or other synchronisation measures. Of course it is also possible to design the checking system independently of a strip consisting of five blister packages, and to undertake individual detection and recordal.

The measuring process according to the invention is not an imaging process, since no image is made of the moulding to be examined. Instead, what is detected is a local temperature measurement.

In addition, ventilators not illustrated here are advantageously arranged over the five production lines between the lens deposit station and the IR camera. These enable the air exchange to be higher. In this way, the evaporation of water on the contact lenses is increased, so that there is increased cooling of the contact lenses. This leads to an improved signal-noise ratio.

Moreover, there may advantageously be a provision for the container detected as being empty to be automatically removed from the packaging appliance.

The following tests carried out by way of example were effected using a detection set-up according to Fig.1:

### Test 1: Production of empty packages randomly distributed.

Approximately 50% empty packages were produced. These had not yet been filled with preserving solution. The empty packages were randomly distributed among the tool holders. An evaluation was made by making a comparison between a manual inspection and the results of the contact lenses detected by the IR camera.

## Claims

1. Method for registering presence of a moulding (5) consisting of a biocompatible polymeric material with adhering moisture in a blister package (2), whereby the package is open, **characterised in that** the package is divided into at least two zones, the local temperature distribution for each zone is measured and the results of measurement from both zones are compared, whereby one zone contains the moulding and the other zone does not, the difference between the two measurements being used to register the presence of a moulding.

2. Method according to claim 1, in which the temperature distribution of several packages is measured simultaneously.

3. Method according to claims 1 or 2, in which an infrared line camera with a resolution of 0.5 to 0.1 K is used.

4. Method according to one of claims 1 to 3, in which a sensor is used to detect when a package enters and/or leaves the measuring area of the infrared line camera.

5. Method according to one or more of claims 1 to 4., in which the moulding is a contact lens.

## Patentansprüche

1. Verfahren zum Erfassen der Anwesenheit eines Formkörpers (5) aus einem biokompatiblen polymeren Material mit anhaftender Feuchtigkeit in einer Blisterverpackung (2), wobei die Verpackung offen ist, **dadurch gekennzeichnet, dass** die Verpackung in zumindest zwei Zonen eingeteilt wird, die örtliche Temperaturverteilung in jeder Zone gemessen wird, und die Ergebnisse der Messung aus beiden Zonen miteinander verglichen werden, wobei die eine Zone den Formkörper enthält und die andere Zone nicht, und wobei die Differenz zwischen beiden Messungen zum Erfassen der Anwesenheit des Formkörpers verwendet wird.

2. Verfahren gemäss Anspruch 1, bei welchem die Temperaturverteilung von mehreren Verpackungen gleichzeitig gemessen wird.

3. Verfahren gemäss Anspruch 1 oder 2, bei welchem eine Infrarot-Linien-Kamera mit einer Auflösung von 0.5 bis 0.1 K verwendet wird.

4. Verfahren gemäss einem der Ansprüche 1 bis 3, bei welchem ein Sensor zur Detektion des Eintritts und/oder Austritts einer Verpackung in den/aus dem Messbereich der Infrarot-Linien-Kamera verwendet wird.

5. Verfahren nach einem oder mehreren der Ansprüche 1 bis 4, bei welchem der Formkörper eine Kontaktlinse ist.

## Revendications

1. Procédé pour enregistrer la présence d'un produit moulé (5) constitué d'un matériau polymère biocompatible avec une humidité adhérente dans un emballage de type blister (2), ledit emballage étant ouvert, **caractérisé en ce que** l'emballage est divisé en au moins deux zones, la distribution de la température locale de chaque zone est mesurée, et les résultats de la mesure des deux zones sont comparés, où l'une des deux zones contient le produit moulé et l'autre non, la différence entre les deux mesures étant utilisée pour enregistrer la présence d'un produit moulé.

2. Procédé selon la revendication 1, dans lequel la distribution de la température de plusieurs emballages est mesurée simultanément.

3. Procédé selon la revendication 1 ou la revendication 2, dans lequel une caméra infrarouge en ligne ayant une résolution de 0.5 à 0.1 K est utilisée.

4. Procédé selon l'une des revendications 1 à 3, dans lequel un capteur est utilisé pour détecter si un emballage rentre dans et/ou quitte la zone de mesure de la caméra infrarouge en ligne.

5. Procédé selon une ou plusieurs des revendications 1 à 4, dans lequel le produit moulé est une lentille de contact.
